Europäisches Patentamt

**European Patent Office**

Office européen des brevets

(11) Veröffentlichungsnummer: **0 224 109**
**A1**

(12) # EUROPÄISCHE PATENTANMELDUNG

(21) Anmeldenummer: 86115586.9

(22) Anmeldetag: 10.11.86

(51) Int. Cl.⁴: **H 02 M 7/5387**

(30) Priorität: 21.11.85 DE 3541227

(43) Veröffentlichungstag der Anmeldung:
03.06.87 Patentblatt 87/23

(84) Benannte Vertragsstaaten:
AT CH DE GB IT LI SE

(71) Anmelder: Siemens Aktiengesellschaft Berlin und
München
Wittelsbacherplatz 2
D-8000 München 2(DE)

(72) Erfinder: Schwesig, Günter, Dipl.-Ing.
Lange Zeile 84
D-8520 Erlangen(DE)

(54) Verfahren und Vorrichtung zum Betrieb eines Pulsumrichters mit Kompensation von durch Träger-Speicher-Effekte hervorgerufenen Fehlspannungszeitflächen.

(57) Zur alternierenden Ansteuerung von auf einen gemeinsamen wechselspannungsseitigen Anschluß (R) arbeitenden Ventilen (T1, T2) eines Pulsumrichters müssen die Steuerimpulse (S1, S2) der Ventile bei jeder Alternierung gemeinsam verriegelt sein. Für jedes Ventil kann das zu seiner Verriegelung angelegte Steuersignal als Sollwert für seine Ventilspannung betrachtet werden, während jedoch die Ist-Ventilspannung erst auftritt, wenn nach einer Speicherzeit dieses Ventil tatsächlich erlischt. Durch Integration der Soll/Istwert-Differenz (UM* − UR) wird daher ein Korrektursignal gebildet, das der Speicherzeit des zuletzt gezündeten Ventils bzw. der während der Verriegelungszeit am Ausgang (R) auftretenden Spannungszeitfläche proportional ist. Dadurch kann der verzerrende Einfluß von Spannungszeitflächen, die aufgrund der Exemplarstreuung von unterschiedlichen Verriegelungszeiten unterschiedlicher Ventile hervorgerufen werden, bereits bei der Bildung der breitenmodulierten Steuerimpulse berücksichtigt werden.

FIG 4

SIEMENS AKTIENGESELLSCHAFT        Unser Zeichen:

Berlin und München                VPA 85 P 3 4 1 3 E

Verfahren und Vorrichtung zum Betrieb eines Pulsumrichters mit Kompensation von durch Träger-Speicher-Effekte hervorgerufenen Fehlspannungszeitflächen.

Die Erfindung betrifft ein Verfahren zum Betrieb eines Pulsumrichters, insbesondere eines Pulsumrichters mit Transistoren oder Abschaltthyristoren (GTO), mit den Merkmalen des Oberbegriffs des Anspruchs 1 sowie eine Vorrichtung hierzu.

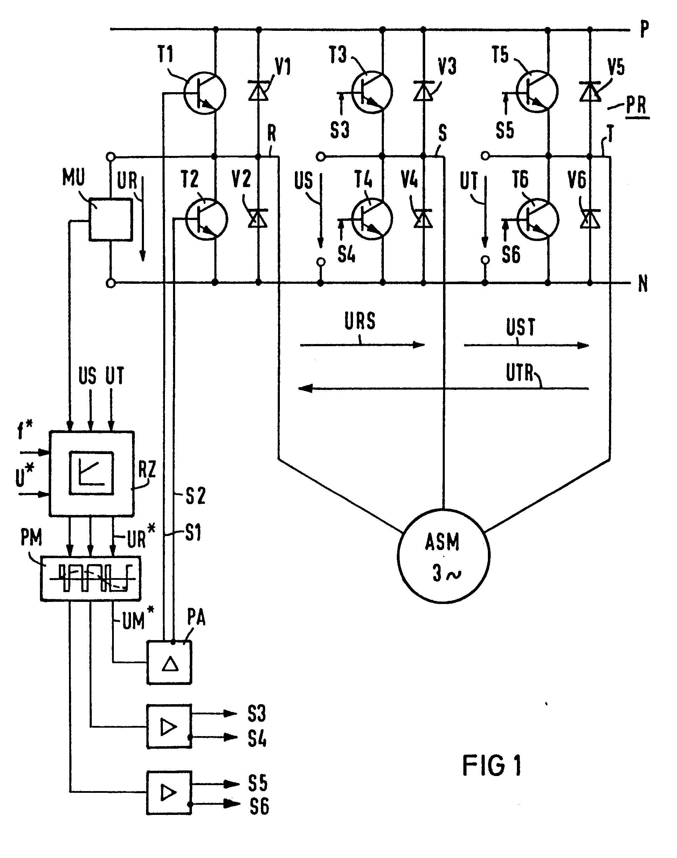

Bevorzugtes Anwendungsgebiet ist die Speisung einer Drehfeldmaschine mittels eines gepulsten Drehspannungssystems. Gemäß Figur 1 ist eine Asynchronmaschine ASM über einen Pulswechselrichter an die Klemmen P, N einer Gleichspannung angeschlossen. Zur Steuerung der Maschine können z.B. die Klemmenspannungen UR, US, UT der Maschine an einer entsprechenden Meßvorrichtung MU gemessen und in einer Regel- und Steuereinheit RZ zusammen mit Sollwerten f*, U* für Frequenz und Amplitude der Wechselrichterausgangsspannung zu einem Sollwert für die Klemmenspannung UR verarbeitet werden.

Selbstverständlich können je nach dem für den Anwendungsfall vorgesehenen Regelgesetz auch andere Soll- und/oder Istwerte verwendet werden. Für die Steuerung oder Regelung der Maschine ist im allgemeinen ein sinusförmiger oder trapezförmiger Verlauf der Phasenspannungen vorteilhaft, der durch den Verlauf einer entsprechenden, z.B. der Phase R zugeordneten Steuerspannung UR* vorgegeben wird, um die auf den gemeinsamen wechselrichterseitigen Anschluß R arbeitenden Ventile zu steuern. Aus UR* werden dann die Steuerimpulse S1, S2 für die auf diesen Anschluß arbeitenden Ventile T1, T2 abgeleitet. Entsprechendes gilt für

Kbl 2 Bmr / 31.10.85

die Steuerimpulse S3, S4 bzw. S5, S6 für die auf den Anschluß S arbeitenden Ventile T3, T4 bzw. die auf den Anschluß T arbeitenden Ventile T5, T6, wobei jeweils einem
Ventil eine antiparallele Freilaufdiode V1...V6 antiparallel geschaltet ist.

Die Erfindung wird im folgenden nur anhand der Ansteuerung
für die auf den wechselstromseitigen Anschlußpunkt R arbeitenden Ventile T1, T2 erläutert. Das hierbei angewendete Verfahren und die benötigten Bauteile sind bei der
Ansteuerung der anderen Ventile jeweils gleichartig anzuwenden und in den weiteren Figuren nicht gesondert erläutert.

Durch alternierendes Ansteuern der Ventile T1 und T2 kann
auf den Anschluß R nur entweder die positive Klemmenspannung oder die negative Klemmenspannung durchgeschaltet
werden. Die Spannung URS kann also nur aus bipolaren, z.B.
sinusförmig breitenmodulierten Spannungsimpulsen bestehen.
Diese führen in der Maschine durch Glättung zu einem dem
(z.B. sinusförmigen) Verlauf der Steuerspannung UR* entsprechenden Phasenstrom. Daher wird für die gepulste Ansteuerung der Ventile vorteilhaft eine hohe Pulsfrequenz,
z.B. einige Kilo-Hertz vorgegeben, und als entsprechend
schnellschaltende Umrichterventile werden vorteilhaft
Transistoren oder GTO-Thyristoren verwendet.

Die Steuerimpulse S1, S2 werden aus einer pulsbreitenmodulierten Steuerspannung UM* abgeleitet, die ein Pulsbreitenmodulator PM durch Abtasten der Steuerspannung UR* mit
einer hochfrequenten, meist dreiecksförmigen Tastspannung
bildet.

Bei idealen Schaltern, deren leitender Zustand sofort mit
dem Ende des ansteuernden Steuerimpulses endet, wäre es
an sich nur erforderlich, in einer nachfolgenden Impulsauswertung PA die Impulse der pulsbreitenmodulierten Steuerspannung UM* zu verstärken und dann unverändert dem Ventil T1 und invertiert dem Ventil T2 aufzuschalten.

Tatsächlich jedoch benötigt das Ventil T1 nach Wegnahme seines Steuerimpulses S1 noch eine gewisse Zeit bis sein leitender Zustand beendet ist und daher von der Klemme P kein Strom mehr über das Ventil T1 fließen kann, sondern der Strom in der Phase R vom Ventil T1 auf das Ventil T2 oder (falls T2 gesperrt ist) das Freilaufventil V2 kommutiert ist. In einer für das Ventil T1 charakteristischen "Speicherzeit" ST1 ist also auch nach Wegnahme des Steuerimpulses S1 der leitende Zustand gespeichert und die Phasenspannung UR wird erst dann von der positiven Klemmenspannung auf die negative Klemmenspannung durchgeschaltet.

Während dieser Speicherzeit darf das Ventil T2 noch nicht angesteuert werden, um einen Kurzschluß der Gleichspannung zu vermeiden. Entsprechendes gilt für die Speicherzeit ST2 des Ventiles T2, wenn der Steuerimpuls S2 für das Ventil T2 weggenommen wird. Bei der alternierenden Ansteuerung der Ventile müssen diese Ventile also jeweils zwischen zwei pulsbreitenmodulierten Steuerimpulsen, mit denen diese alternierend angesteuert werden, kurzzeitig gemeinsam verriegelt werden.

Diese Verriegelung wird durch eine entsprechende (im einzelnen nicht dargestellte) Schaltung in der Impulsauswertung PA vorgenommen. Im allgemeinen ist dabei eine konstante Verriegelungszeit eingestellt, die dann größer sein muß als die maximal in einem der beiden Ventile mögliche Speicherzeit. Die Steuerimpulse S1 und S2 sind also jeweils um die Verriegelungszeit VT kürzer als die binären Zustände der pulsbreitenmodulierten Steuerspannung UM*, aus der sie abgeleitet sind. Die Steuerimpulse beschreiben demnach eine pulsbreitenmodulierte Kurve, deren Amplitude entsprechend den Verriegelungszeiten VT und der Anzahl der innerhalb einer UR*-Periode vorgenommenen Verriegelung verringert ist. Diese Verringerung kann an sich bereits bei der
Bildung UR* bzw. UM* und somit bei der Pulsbreitensteuerung
für die Steuerimpulse berücksichtigt werden.

Auf die Ist-Spannung UR wirkt sich dabei nicht die Verriegelungsbreite VT, sondern die Differenz VT - ST1 beim Abkommutieren des Stromes von T1 bzw. die Differenz von
VT - ST2 beim Abkommutieren des Stromes von T2 aus. Die
Speicherzeiten eines Halbleiterventiles unterliegen aber
starken Exemplarstreuungen und können sich auch belastungsabhängig ändern.

Obwohl sich die unterschiedlichen Speicherzeiten nach jeweils zwei Verriegelungen, d.h. in einem Alternierungszyklus, nur wenig auswirken, summieren sie sich wegen der
hohen Schaltfrequenz innerhalb einer Periode der Steuerspannung UR*, die dem Sollwert für die geglättete Spannung
UR entspricht, zu einer Abweichung der Ist-Spannung, die
sich als störende Verzerrung von der gewünschten Kurvenform bemerkbar macht.

Aufgabe der Erfindung ist es, derartige, durch Träger-
Speicher-Effekte während der Verriegelungszeiten hervorgerufene Verzerrungen zu vermeiden.

Diese Aufgabe wird gelöst durch ein Verfahren mit den
Merkmalen des Anspruchs 1 bzw. eine Vorrichtung mit den
Merkmalen des Anspruchs 8. Vorteilhafte Weiterbildungen
der Erfindung sind in den Unteransprüchen gekennzeichnet.

Anhand von zwei Ausführungsformen und vier Figuren wird
die Erfindung näher erläutert.

0224109

Es zeigen:

Figur 1 den bereits erläuterten bevorzugten Anwendungsfall der Erfindung,

Figur 2 typische Signalverläufe bei der Durchführung der Erfindung,

Figur 3 und Figur 4 jeweils eine in Analogtechnik bzw. Digitaltechnik aufgebaute Ausführungsform der Erfindung.

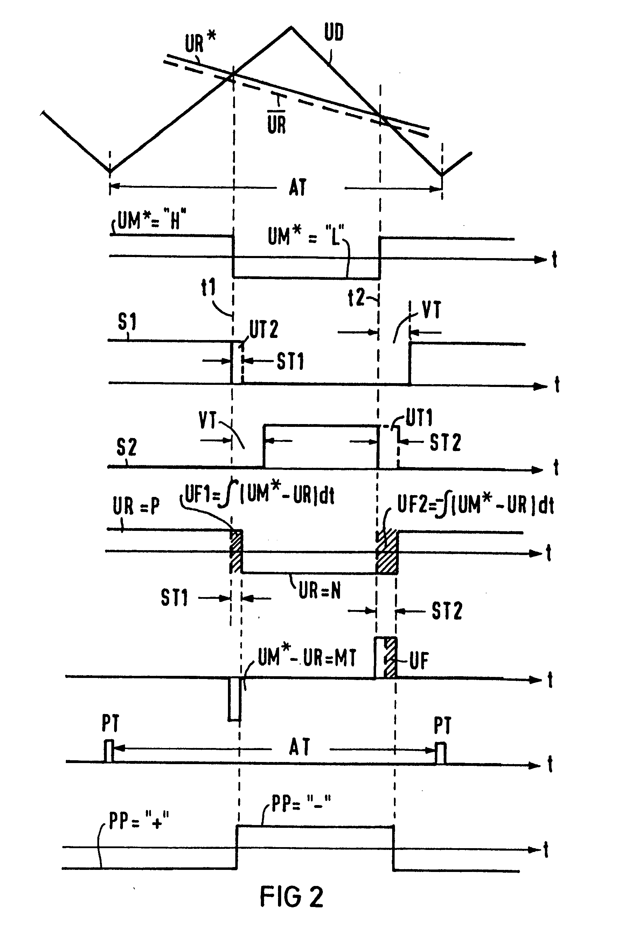

In Figur 2 ist zunächst der Verlauf der unmodulierten Steuerspannung UR* und der hochfrequenten Tastspannung UD dargestellt, aus deren Schnittpunkte der Pulsbreitenmodulator PM die pulsbreitenmodulierte Steuerspannung UM* bildet. Dem Zustand UM* = H entspricht dabei ein Impuls, aus dem der Steuerimpuls S1 für das Ventil T1 abgeleitet werden soll, während der Zustand UM* = L einem Impuls für die Bildung des Steuerimpulses S2 für die Ansteuerung des Ventils T2 zugeordnet ist. Ist durch den Steuerimpuls S1 zunächst T1 leitend angesteuert, so ist die Spannung P auf den Anschluß R durchgeschaltet und liegt als Ventilspannung an dem gesperrten Ventil T2 an. Normiert man daher die Ventilspannungen auf die angelegte Gleichspannung und sieht vom Durchlaßspannungsabfall der Ventile ab, so kann die Ventilspannung UT2 als binäres Istwertsignal aufgefaßt werden, dem das Sollsignal S1 zugeordnet ist. Sie stimmen bis zum Zeitpunkt T1 überein, an dem der Steuerimpuls S1 beendet wird.

Der bisher durch T1 fließende Strom benötigt nun die Speicherzeit ST1, bis er auf die Freilaufdiode V2 bzw. das dann gezündete Ventil T2 kommutieren kann. Die Ventilspannung UT2 bzw. die Spannung UR bricht daher erst zum Zeit- punkt t1 + ST1 zusammen. Gegenüber der während der Verrie- gelungszeit durch UM* bzw. S1 vorgegebenen Sollspannung entsteht durch Integration der Soll/Istwert-Differenz eine Spannungs-Zeitfläche $UF1 = \int (UM^* - UR)dt$. Für die Dauer der Verriegelungszeit VT bleiben die Steuerimpulse S1, S2 für

beide Ventile T1, T2 gemeinsam verriegelt und der Steuerimpuls S2 wird erst mit der durch die Verriegelungszeit VT
gegebenen zeitlichen Verschiebung nach der Impulsflanke
der pulsbreitenmodulierten Steuerspannung UM* freigegeben.

Zum Zeitpunkt t2 soll entsprechend der Impulsflanke von
UM* eine Rückkommutierung des Stromes auf das Ventil T1
vorgenommen werden und der Steuerimpuls S2 wird beendet.
S1 dagegen bleibt für die Dauer der Verriegelungszeit VT
gesperrt. Die Ventilspannung UT1 des Ventils T1, die wieder als binärer Istwert dargestellt ist, geht aber erst
zum Zeitpunkt t2 + ST2 in den Anfangszustand über, da das
Ventil T2 während der Speicherzeit ST2 noch leitend ist.
Es entsteht daher gegenüber dem binären Sollwert UM* bzw.
dem Sollwert ST2 für die Ventilspannung UT1 ebenfalls eine
Spannungszeitfläche UF2.

Da beim leitenden Zustand des einen Ventils jeweils die
Spannung UR als Ventilspannung am anderen Ventil anliegt,
kann als gemeinsames Maß für die jeweiligen Ventilspannungen direkt die Spannung am Anschluß R erfaßt werden.
Insbesondere genügt es, als Meßwert für die Ventilspannungen bzw. diese Anschlußspannung lediglich ein binäres
Signal zu erfassen. Bevorzugt wird die Istspannung potentialfrei erfaßt. Sie kann dann auf einfache Weise mit den
Steuerimpulsen verglichen werden. Die entsprechenden binären Sollwerte sind durch die Steuerimpulsfolgen S1, S2
bzw. durch die den Steuerimpulsen gemeinsam zugrunde gelegte pulsbreitenmodulierte Steuerspannung UM* gegeben.

Die entsprechenden Spannungs-Zeitflächen UF1 und UF2 in
zwei aufeinanderfolgenden Verriegelungszeiten sind in
Fig. 2 schraffiert dargestellt als Integrale der Soll/Istwertdifferenz UM*-UR, die somit während der Speicherzeiten
ST1 und ST2 die Werte ± 1 annimmt, während für die restliche Dauer jeder Verriegelungszeit sowie zwischen den Verriegelungen UM*-UR = 0 gilt.

In Fig. 2 ist neben dem Verlauf der unmodulierten Steuerspannung UR auch der Verlauf $\overline{UR}$ der geglätteten Anschlußspannung dargestellt. Die Abweichung beider Größen ist von der jeweiligen Fehlspannungs-Zeitfläche UF = UF1-UF2 und damit der Speicherzeit abhängig, die daher als Störgröße wirkt und als Vorsteuergröße im Sinn einer Störgrößenaufschaltung bei der Pulsbreitenmodulation berücksichtigt werden kann. Wird daher z.B. eine aus der Fehlspannungszeitfläche des Ventils T1 abgeleitete Korrekturgröße der Steuerspannung UR* aufgeschaltet, so kann dadurch die Dauer des Zustands UM* = H entsprechend verlängert und die Pulsbreite von S1 vorgesteuert werden.

Für die Differenz UR* - $\overline{UR}$ ist aber nur die in Figur 2 schraffierte Differenz UF der Speicherzeiten bzw. Spannungs-Zeitflächen UF1, UF2 entscheidend. Deshalb wird die entsprechende Zeitflächen-Differenz oder eine geeignete Funktion davon als Korrekturgröße verwendet. Diese Differenz kann bei binären Ist- und Sollwerten durch Integration der Fehlspannung (UM*-UR) über einen vollen Alternierungszyklus gebildet werden. Es genügt aber, die Integration nur während der beiden Verriegelungszeiten eines Zyklus vorzunehmen und dann die Integrale vorzeichenrichtig zu addieren bzw. deren Beträge zu subtrahieren.

In Fig. 2 ist daher ein Zyklus-Taktimpuls PT dargestellt, der jeweils einen neuen Alternierungszyklus einleitet, um die Differenz der innerhalb eines Zyklus auftretenden Fehlspannungszeitflächen zu bilden. Dieser Impuls PT ist im Beispiel aus der negativen Amplitude der Tastspannung UD abgeleitet, er kann aber auch aus den Flanken der Steuerimpulse oder auf andere Weise hergeleitet werden.

Die Differenz der beiden binären Signale UM* und UR unterdrückt die Abweichungen des exakten (analogen) Meßwertes der Ventilspannungen von ihren Sollwerten. Ein positives Differenzsignal UM*-UR stellt daher einen Meßimpuls dar, der den leitenden Zustand des Ventils T1 kennzeichnet und dessen Dauer gleich der Speicherzeit ST1 ist. Entsprechend stellt ein negatives Differenzsignal einen Meßimpuls für den leitenden Zustand des Ventils T2 dar. Um die Korrekturgröße für die Pulsbreiten zu bilden, genügt es daher, statt die exakten Fehlspannungen zu messen, unter Beachtung des Vorzeichens lediglich diese Meßimpulse zu integrieren. Die Integration (im digitalen Fall also ein Zählvorgang) liefert dann Meßimpuls-Dauern, die den Spannungs-Zeitflächen UF1, UF2 ungefähr proportional sind und die Speicherzeiten erfassen.

Um die innerhalb eines Alternierungszyklus auftretenden zwei Meßimpulsdauern den Ventilspannungen vorzeichenrichtig zuzuordnen, ist in Fig. 2 noch ein Polaritätssignal PP angegeben, das aus geeigneten Impulsflanken, z.B. der negativen Flanke von UR, abgeleitet ist.

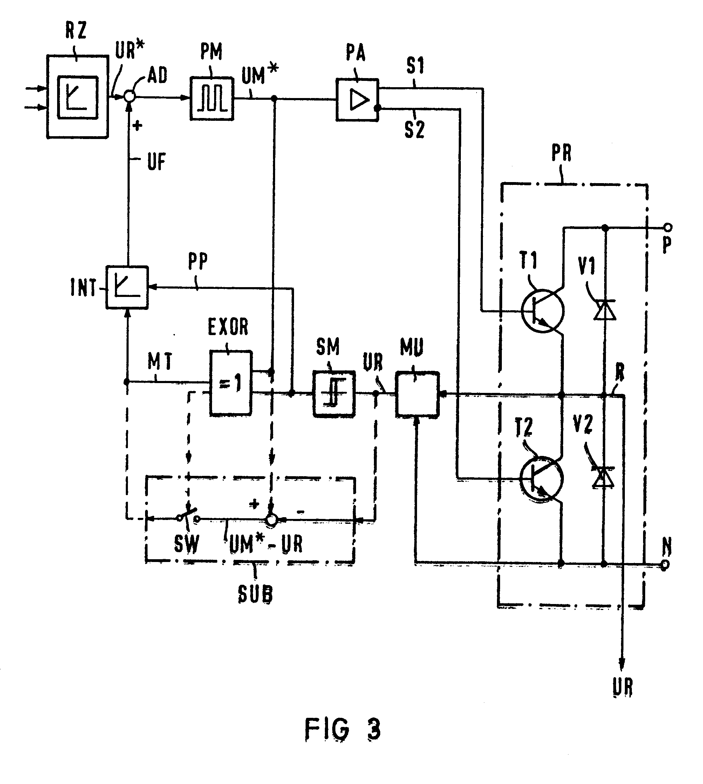

In Fig. 3 ist eine erste, in Analogschaltung aufgebaute Ausführungsform der Erfindung gezeigt, die die bereits aus Fig. 1 bekannte Steuereinrichtung RZ, den Pulsumrichter PR mit seinen seiner Anschluß-Wechselspannung UR zugeordneten Ventilen T1, T2 und den Freilaufventilen V1 und V2, sowie die aus dem Pulsbreitenmodulator PM und der Pulsauswertung PA bestehende Modulationsstufe enthält. Zur Steuerung der Pulsbreiten der Steuerimpulse S1, S2 ist der Steuerspannung UR* an einem Additionsglied AD eine aus dem Ausgangssignal UF eines Integrators INT abgeleitete Korrekturgröße aufgeschaltet.

Die Spannung UR wird als Meßsignal, das den leitenden Zustand eines angesteuerten Ventils wiedergibt, von der Ventilspannungs-Meßeinrichtung MU erfaßt.

Zur Verdeutlichung des erfindungsgemäßen Verfahrens wird zunächst die Subtraktionsschaltung SUB betrachtet, in der der durch UM* vorgegebene Sollwert für die Ventilspannungen mit dem durch UR erfaßten Istwert verglichen wird, um anschließend dem Integrator INT zur Bildung der jeweils während einer Verriegelungszeit auftretenden Spannungszeitfläche zugeführt zu werden. Mit MT sei dabei zunächst ein Schaltimpuls bezeichnet, der nicht dem Integratoreingang, sondern dem Steuereingang eines Schalters SW zugeführt wird und den Integratoreingang höchstens jeweils während einer Verriegelungszeit freigibt. Außerhalb der Verriegelungszeit erfaßte Spannungsistwerte UR sind also für die Ermittlung der Korrekturgröße außer Eingriff.

Der Schaltimpuls MT wird durch Verknüpfung der pulsbreitenmodulierten Steuerspannung UM* (ersatzweise: der daraus abgeleiteten Steuerimpulse S1, S2) mit dem Meßsignal UR gebildet, das mittels eines Schwellwertgliedes SM in ein binäres, mit der pulsbreitenmodulierten Steuerspannung UM* direkt vergleichbares Signal umgewandelt werden kann. Ist nun das Ventil T1 durch die Signalzustände UM*=H angesteuert und das Ventil T2 durch S2 = L gesperrt, so ist die Anschlußspannung UR praktisch gleich der Ventilspannung UT2 des Ventils T2 und das Schwellwertglied SM ist im Zustand H, so daß ein nachgeschaltetes EXKLUSIV-ODER-Gatter EXOR keinen Schaltimpuls erzeugt (MT = 0). Dieser Zustand tritt auch ein, wenn UM* = S1 = L, S2 = H gilt und wegen der Sperrung des Ventils T1 die Anschlußspannung UR gleich der Ventilspannung UT1 des Ventils 1 ist und das Schwellwertglied-Ausgangssignal L vorliegt.

Zu dem in Figur 2 dargestellten Zeitpunkt t1 gehen nun UM* und S1 in ihren anderen Zustand über, während für die Dauer der Speicherzeit ST1 das Schwellwertglied SM entsprechend dem unverändert leitenden Ventil T1 seinen ursprünglichen Zustand beibehält. Folglich liegt nun für die Dauer der Speicherzeit ST1 der Schaltimpuls MT = L vor und der Schalter SW liefert die Differenz UM* - UR als Meßimpuls auf den Integratoreingang. Wenn aber nach Ablauf der Speicherzeit ST1 der Schalter T1 sperrt und daher UR umkippt, so verschwindet auch der Meßimpuls MT und der Schalter SW bringt das Meßsignal UR wieder außer Eingriff. Folglich wird das Meßsignal UR bzw. die entsprechende Differenz UM* - UR jeweils nur für die Dauer des Meßimpulses MT im Integrator integriert.

Wie bereits anhand von Figur 2 erläutert wurde, kann aber im Integrator anstelle einer Integration der Ventilspannungen UR auch ein Binärsignal integriert werden, das nur während einer Verriegelungszeit auftritt und mit dem Ende des leitenden Zustands eines Ventils endet. Dies ist für den Meßimpuls MT der Fall, der somit äquivalent zur Differenz UM* - UR ist. Das Gatter EXOR übernimmt dabei die Rolle des Subtraktionsgliedes SUB, sofern das Polaritätssignal PP dazu verwendet wird, um die jeweils während einer Verriegelungszeit auftretende Polaritätsumkehr des Meßsignals UR durch eine entsprechende Vorzeichenbewertung am Integratoreingang zu berücksichtigen. Das Subtraktionsglied SUB samt seiner Ein- und Ausgänge ist in diesem Fall überflüssig.

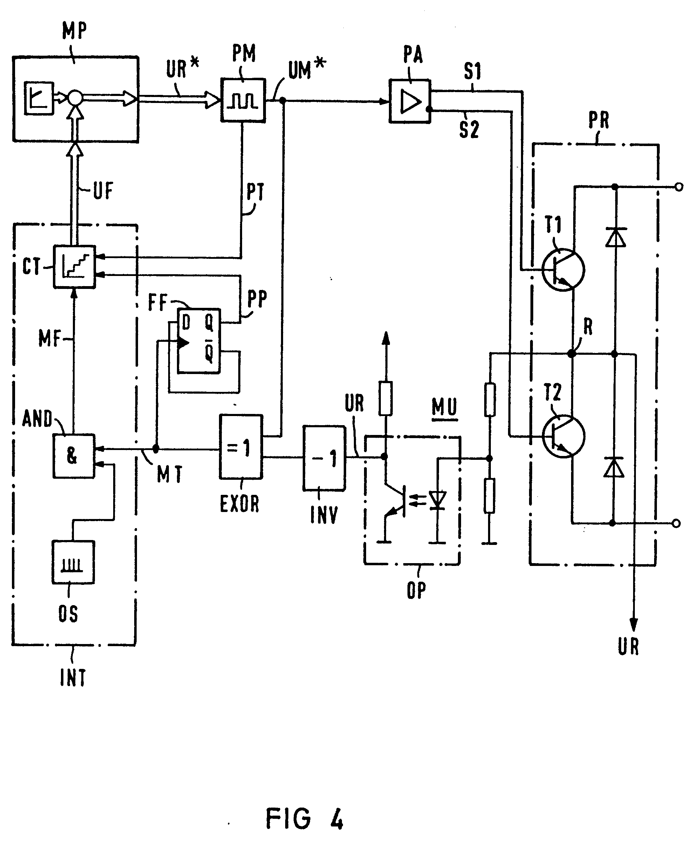

Diese Anordnung läßt sich leicht vollständig digitalisieren, wie bei der bevorzugten Ausführungsform nach Fig. 4 dargestellt ist. Bei dieser Ausführungsform ist die Steuereinheit RZ durch einen Mikroprozessor MP ersetzt, der aus digital eingegebenen Soll- und Istwerten unter Berücksichtigung des - jetzt ebenfalls digital eingegebenen - Korrektursignals UF die unmodulierte Steuerspannung UR* liefert. Der Pulsbreitenmodulator PM und die Pulsauswertung PA bilden daraus die Steuerimpulse S1 und S2.

Die Ventilspannungs-Meßeinrichtung enthält einen Optokoppler OP zur potentialfreien Messung der Ventilspannungen, wobei beide Ventilspannungen gemeinsam aufgrund der beschriebenen Zusammenhänge durch die Spannung UR an ihrem gemeinsamen Anschlußpunkt erfaßt sind. Ein invertierendes Glied INV bildet ein binäres Meßsignal, dessen Signalzustand H somit den leitenden Zustand eines Ventils kennzeichnet. Diese Zustände werden in einer Verknüpfungsschaltung, die neben dem die Verknüpfungslogik darstellenden Gatter EXOR noch eine Zählersteuerung enthält, in den Meßimpuls MT umgesetzt.

Anstelle eines analogen Integrators ist ein Vorwärts-Rückwärts-Zähler CT für die Impulse eines Zählimpulsgebers OS vorgesehen, dessen Pulsfrequenz z.B. bei einigen MHz liegen kann und der somit eine gegenüber den Verriegelungszeiten kleine Impulsperiode aufweist. Der Eingang dieses Zählers wird von einem UND-Gatter AND nur bei Koinzidenz mit dem Meßimpuls MT freigegeben, während die Zählrichtung durch das Polaritätssignal PP bestimmt ist.

Dieses Polaritätssignal PP wird mittels eines D-Flip-Flops aus den Flanken des Meßimpulses MT so gebildet, daß jeweils nach zwei Verriegelungszeiten die Zählrichtung umgekehrt wird.

Um außerdem als Korrekturgröße nur die Differenz zweier bei aufeinanderfolgenden Verriegelungszeiten gemessenen Spannungszeitflächen zu bilden, wird der Zählerstand von dem bereits erwähnten Alternierungstakt-Impuls PT jeweils zu Beginn eines Alternierungstaktes rückgesetzt, so daß am Ende des Alternierungstaktes nur die in Figur 2 dargestellte Zeitflächendifferenz UF zur Pulsbreitenkorrektur ausgelesen und verwendet wird.

Die Erfindung ermöglicht es somit, durch eine verhältnismäßig einfache Zusatzeinrichtung insbesondere bei Transistor-Pulsumrichtern eine durch den Träger-Speicher-Effekt
verursachte Verzerrung der Ausgangs-Wechselspannung zu
vermeiden.

14 Patentansprüche
4 Figuren

0224109

## Patentansprüche

1. Verfahren zum Betrieb eines Pulsumrichters, insbesondere eines Pulsumrichters (PR) mit Transistoren oder Abschaltthyristoren, wobei aus einer Steuerspannung (UR*) für zwei auf einen gemeinsamen wechselstromseitigen Anschluß (R) arbeitende Umrichterventile (T1, T2) Steuerimpulse (S1, S2) zur alternierenden Ansteuerung dieser Ventile gebildet und die Ventile jeweils zwischen zwei breitenmodulierten Steuerimpulsen kurzzeitig gemeinsam verriegelt werden, d a d u r c h   g e k e n n - z e i c h n e t ,   daß während der Verriegelungszeiten (VT) aus einem den Ventilspannungen (UT1, UT2) entsprechenden Meßsignal (UR) durch Integration eine Spannungszeitfläche (UF = UF1-UF2= $\int$(UM*-UR)dt) gebildet und die Breite der Steuerimpulse (S1, S2) mit einer aus der Spannungszeitfläche abgeleiteten Korrekturgröße (UF) als Störgröße vorgesteuert wird. (Fig. 2)

2. Verfahren nach Anspruch 1, d a d u r c h   g e - k e n n z e i c h n e t ,   daß während einer Verriegelungszeit (VT) die Abweichung der Ist-Ventilspannung (UR) des zuletzt angesteuerten Ventiles von der durch die pulsbreitenmodulierten Steuerimpulse vorgegebenen Soll-Ventilspannung (S1; S2) erfaßt und integriert ($\int$(UM*-UR)dt) wird. (Fig. 2)

3. Verfahren nach Anspruch 2, d a d u r c h   g e - k e n n z e i c h n e t ,   daß die Ist-Ventilspannung potentialfrei erfaßt wird.

4. Verfahren nach einem der Ansprüche 1 bis 3, d a - d u r c h   g e k e n n z e i c h n e t ,   daß innerhalb eines zwei Verriegelungszeiten enthaltenden Alternierungszyklus (AT) die Korrekturgröße (UF) aus der Differenz der während der beiden Verriegelungszeiten ermittelten Spannungszeitflächen gebildet wird. (Fig. 2)

5. Verfahren nach einem der Ansprüche 1 bis 4, d a -
d u r c h   g e k e n n z e i c h n e t , daß die beiden Ventilspannungen durch Messung der Spannung (UR) an
ihrem gemeinsamen Anschlußpunkt gemeinsam erfaßt werden.

6. Verfahren nach einem der Ansprüche 1 bis 5, d a -
d u r c h   g e k e n n z e i c h n e t ,  daß als Maß
für die während einer Verriegelungszeit (VT) auftretende
Spannungszeitfläche die Speicherzeit (ST1, ST2) des zuletzt angesteuerten Ventils verwendet und die Speicherzeit dieses Ventils durch Messung der Zeit zwischen dem
Ende seines Steuerimpulses und dem Ende seines leitenden
Zustands erfaßt wird. (Fig. 2)

7. Verfahren nach einem der Ansprüche 1 bis 6, d a -
d u r c h   g e k e n n z e i c h n e t ,  daß jeweils
in einem zwei Verriegelungszeiten enthaltenden Alternierungszyklus (AT) jeweils am Ende eines Steuerimpulses ein
bis zum Ende des leitenden Zustandes des dem Steuerimpuls
zugeordneten Ventils dauernder Meßimpuls (MT) gebildet
und integriert wird, daß aus der Differenz der in den
beiden Verriegelungszeiten gebildeten Integrale die Korrekturgröße (UF) gebildet wird und die Korrekturgröße
der Steuerspannung zur Bildung der breitenmodulierten
Steuerimpulse aufgeschaltet wird. (Fig. 2)

8. Vorrichtung zum Betrieb eines Pulsumrichters, insbesondere eines Transistor-Pulswechselrichters, mit
   a) einer Steuereinrichtung (RZ; MP) zur Bildung einer
      Steuerspannung (UR*) für zwei auf jeweils einem ge-
      meinsamen wechselstromseitigen Anschluß (R) arbeiten-
      de, alternierend angesteuerte Umrichterventile (T1,
      T2), und

b) einer von der Steuerspannung (UR*) gesteuerten Modulationsstufe (PM,PA) zur Bildung von breitenmodulierten Steuerimpulsen (S1, S2) für die Stromrichterventile, mit Mitteln zur kurzzeitigen gemeinsamen Verriegelung der beiden Ventile am Ende des Steuerimpulses für ein Ventil,

g e k e n n z e i c h n e t   d u r c h :

c) eine Ventilspannungs-Meßeinrichtung (MU) zur Bildung eines dem leitenden Zustand eines angesteuerten Ventils entsprechenden Meßsignals (UR),

d) eine Verknüpfungsschaltung für das Meßsignal und die pulsbreitenmodulierte Steuerspannung zur Bildung eines Meßimpulses (MT),

e) einen Integrator (INT) für den Meßimpuls (MT) und

f) Korrekturmittel zur Korrektur der Steuerspannung (UR*) in Abhängigkeit von Ausgangssignal (UF) des Integrators.(Fig. 3, Fig. 4)

9. Vorrichtung nach Anspruch 8,   d a d u r c h   g e - k e n n z e i c h n e t ,   daß die Ventilspannungs-Meßeinrichtung einen Optokoppler (OP) enthält. (Fig. 4)

10. Vorrichtung nach Anspruch 8 oder Anspruch 9,   g e - k e n n z e i c h n e t   d u r c h   eine Verriegelung (SW, Fig. 3  bzw. AND, Fig. 4), die den Integratoreingang außerhalb der Verriegelungszeiten sperrt.

11. Vorrichtung nach Anspruch 10,   d a d u r c h   g e k e n n z e i c h n e t ,   daß am Ausgang (INV) der Ventilspannungserfassungseinrichtung ein den logischen Zustand der Ventilspannungen erfassendes Meßsignal abgegriffen und mit der pulsbreitenmodulierten Steuerspannung (UM*) in einer die Verriegelung steuernden Verknüpfungslogik (EXOR) so verknüpft wird, daß der Integratoreingang gesperrt wird, wenn während einer Verriegelungszeit am zuletzt angesteuerten Ventil eine Ventilspannung
auftritt. (Fig. 3, Fig. 4)

12. Vorrichtung nach einem der Ansprüche 8 bis 11, g e -
k e n n z e i c h n e t  d u r c h  eine Integratorsteuerung (FF), die während eines zwei Verriegelungszeiten enthaltenden Alternierungszyklus die während einer
Verriegelungszeit auftretenden Meßimpulse (MT) mit unterschiedlichen Vorzeichen bewertet und nach jedem Alternierungszyklus die Summe der beiden mit unterschiedlichen
Vorzeichen integrierten Meßimpulse dem Steuerspannungseingang der Modulationsstufe aufschaltet. (Fig. 4)

13. Vorrichtung nach einem der Ansprüche 8 bis 12,
d a d u r c h  g e k e n n z e i c h n e t , daß

a) die Steuereinrichtung (MP) eine digitale Steuerspannung erzeugt, zu der ein digitales Korrektursignal (UF)
addiert ist,

b) die Modulationsstufe einen Pulsbreitenmodulator (PM)
zur Erzeugung einer pulsbreitenmodulierten binären
Steuerspannung (UM*) und eine Impulsauswertung (PA)
zur Bildung je einer pulsbreitenmodulierten Steuerimpulsfolge für jedes Ventil (T1, T2) enthält,

c) die Ventilspannungs-Meßeinrichtung einen an den gemeinsamen Anschluß (R) der Ventile angeschlossenen Optokoppler (OP) zur Bildung eines binären Meßsignals
enthält,

d) die Verknüpfungsschaltung aus einer vom binären Meßsignal und von den pulsbreitenmodulierten Steuerimpulsfolgen oder der pulsbreitenmodulierten Steuerspannung
(UM*) gespeisten Verknüpfungslogik (EXOR) die jeweils nach Ende eines Steuerimpulses bis zum Ende des leitenden Zustandes des vom Steuerimpuls angesteuerten Ventils einen binären Meßimpuls (MT) erzeugt, und aus einer Zählersteuerung (FF) besteht, die innerhalb eines zwei Verriegelungszeiten enthaltenden Alternierungszyklus die beiden auftretenden Meßimpulse mit unterschiedlichem Vorzeichen bewertet,

e) der Integrator einen Zählimpulsgeber (OS) mit einer gegenüber den Verriegelungszeiten kleinen Impulsperiode und einen nachgeordneten Vorwärts-Rückwärts-Zähler (CT) enthält, wobei der Eingang des Zählers während des Meßimpulses freigegeben und seine Zählrichtung entsprechend der Vorzeichenbewertung des Meßimpulses vorgegeben ist, und

f) das Ausgangssignal des Integrators der Steuereinrichtung zur Bildung des digitalen Korrektursignals zugeführt ist.

14. Vorrichtung nach einem der Ansprüche 8 bis 13, d a - d u r c h   g e k e n n z e i c h n e t , daß der Integrator über einen Rücksetzeingang zu Beginn jedes Alternierungszyklus rücksetzbar ist.

FIG 1

FIG 2

FIG 3

0224109

FIG 4

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | EP-A-0 121 575 (M. KURAKAKE) <br> * Seite 17, Zeilen 1-16 * <br><br> --- | 1 | H 02 M 7/538 |
| A | EP-A-0 085 541 (K. SAKAMOTO) <br> * Zusammenfassung * <br><br> ----- | 1 | |

**RECHERCHIERTE SACHGEBIETE (Int. Cl 4)**

H 02 M 7/00

Der vorliegende Recherchenbericht wurde für alle Patentansprüche erstellt.

| Recherchenort | Abschlußdatum der Recherche | Prüfer |
|---|---|---|
| DEN HAAG | 17-02-1987 | BERTIN M.H.J. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82